# EUROPÄISCHE PATENTANMELDUNG

(11) **EP 4 520 469 A2**
(43) Veröffentlichungstag der Anmeldung: **12.03.2025**
(21) Anmeldenummer: 24181533.1
(22) Anmeldetag: 11.06.2024
(51) Int. Cl.: B23K 26/03, B23K 31/12

(54) **VERFAHREN ZUR ÜBERWACHUNG EINES LASERSTRAHLSCHWEISSVORGANG UND ÜBERWACHUNGSEINRICHTUNG**

(30) Priorität: 21.06.2023 DE 102023205797
(71) Anmelder: Robert Bosch GmbH, 70442 Stuttgart (DE)
(72) Erfinder: Boley, Meiko, 71229 Leonberg (DE); Ramsayer, Reiner, 71277 Rutesheim (DE)

(57) **Zusammenfassung**

Die Erfindung betrifft ein Verfahren zur Überwachung eines Laserstrahlschweißvorgangs, wobei ein optisches Signal zumindest von einem Bereich der flüssigen Schmelze, insbesondere zumindest von einem Bereich der Dampfkapillare (14), aufgenommen und aus dem optischen Signal (29) Signale (24, 25) unterschiedlicher optischer Polarisationsrichtungen erzeugt werden, dadurch gekennzeichnet, dass die Helligkeit der optischen Signale (24, 25) unter Berücksichtigung von Referenzinformationen derart ausgewertet werden, dass bei einer vorgegebenen Abweichung von den Referenzinformationen eine Störung des Laserstrahlschweißvorgangs ermittelt wird.

## Beschreibung

### Stand der Technik

Aus dem Artikel "Adaption of a topographical measurement system for beam welding processes with high temporal and spatial resolution", Journal of Advanced Joining Processes 1 (2020), Reisgen et al, ist bereits ein Messsystem für ein Elektronenstrahlschweißsystem bekannt, bei dem mittels eines Goniometers ein Bild der Prozesszone aufgenommen und in unterschiedlichen Polarisationsrichtungen zerlegt wird. Hochgeschwindigkeitskameras nehmen hierbei Bilddaten des Schmelzbades in vier unterschiedlichen Polarisationsrichtungen des Lichtes auf und ermöglichen durch die Auswertung der Bildinformationen eine Interpretation des Elektronenstrahlschweißvorgangs.

### Vorteile der Erfindung

Das erfindungsgemäße Verfahren zur Überwachung eines Laserstrahlschweißvorgangs hat demgegenüber den Vorteil, dass eine Helligkeit von Lichtstrahlen unterschiedlicher Polarisationsrichtungen ausgewertet werden, die von einem beobachteten Arbeitsbereich eines Laserstrahlschweißvorgangs, insbesondere von der Dampfkapillare des Schweißvorgangs, aufgenommen werden. Gegenüber einer Verarbeitung eines aufgenommenen Bildes hat die Auswertung lediglich der Helligkeit den Vorteil, dass eine wesentlich geringere Datenmenge für die Auswertung bereitgestellt und verarbeitet werden muss. Durch einen Vergleich mit bereits vorliegenden Referenzinformationen ist es aber dabei dennoch möglich, Auffälligkeiten bei einem Laserstrahlschweißvorgang zu bestimmen und Störungen oder Fehler bei dem Schweißvorgang zu ermitteln.

Denn bei der Prozessüberwachung geht es vorrangig nicht darum, die Dampfkapillare exakt geometrisch zu vermessen und zu charakterisieren, sondern vielmehr lediglich darum Abweichungen oder Anomalitäten zu detektieren. Dazu hat sich herausgestellt, dass keine Auswertung über ein Kamerabild erfolgen muss, sondern eine einfachere Auswertung ein gleiches Ergebnis erreichen kann. Damit kann mit geringeren Datenmengen eine schnelle und dennoch überraschend ausreichend genaue Auswertung erfolgen.

Gegenüber einer reinen Auswertung der Helligkeit als solche bei einer Beobachtung der Dampfkapillare hat die Auswertung der nach Polarisationsrichtungen aufgeteilten Lichtstrahlen denjenigen Vorteil, dass Veränderungen der Oberfläche die optischen Eigenschaften und insbesondere die Intensität des reflektierten Strahls für einzelne Polarisationsrichtungen stärker beeinflusst als die gesamte Helligkeit über alle Polarisationsrichtungen aufaddiert. Insofern ist es damit wesentlich leichter, durch die Auswertung der Helligkeit für einzelne Polarisationsrichtungen, Abweichungen von Referenzwerten zu bestimmen, wenn der Laserstrahlschweißvorgang gestört ist. Dennoch ist insbesondere im Vergleich zur Bildauswertung durch Hochgeschwindigkeitskameras eine wesentlich geringere Rechenleistung für den Vergleich von Helligkeitsinformationen in aufgenommenen Messsignalen mit gespeicherten Referenzinformationen möglich. Damit können bei Laserschweißprozessen, insbesondere auch bei hohen Vorschubgeschwindigkeiten, wie beispielsweise beim Schweißen von Bipolar-Platten von Brennstoffzellen oder bei einem Schweißen von Kupferkomponenten für Elektromotoren und Leistungselektronik, Anomalien in einem Schweißvorgang sicher erkannt und gegebenenfalls durch das Einleiten von Gegenmaßnahmen rechtzeitig beseitigt werden. So ist es insbesondere möglich, Veränderungen im Strömungsverhalten des Schmelzbades, Fluktuationen in der Dampfkapillare, Schmelzbadauswürfe oder Spritzer zu erkennen.

Durch die Auswertung unterschiedlicher Polarisationsrichtungen ist es auch möglich, Fehler durch Streuungen, die bei einem derartigen Laserschweißprozess regelmäßig auftreten, sicher auszuschließen. So ist es beispielsweise auch möglich, bei einem Teilauswurf oder einem vollständigen Auswurf der Schmelze aus der Dampfkapillare bei der Auswertung unterschiedlicher Polarisationsrichtungen, eine Dampfkapillar-Verformung zu erkennen, während bei einer integralen Helligkeitsauswertung über alle Polarisationsrichtungen aufgrund der heißen Dampfkapillar-Wände möglicherweise eine Erkennung einer Störung noch nicht erfolgen kann. Mit der Auswertung der Helligkeit für einzelne Polarisationsrichtungen ist es dabei möglich, die Oberfläche unter Berücksichtigung von Einflüssen durch Schnittfrontwinkel oder anderer Oberflächentopologien auszuwerten. Diese Detektion von Schweißfehlern geht davon aus, dass sich bei jedem Schweißnahtdefekt, der detektiert werden soll und kann, auch vorher die Kapillarform ändern muss. Denn über die Dampfkapillare wird die Energie in das Bauteil eingebracht. Wird zu wenig oder zu viel Energie eingebracht, so ändert sich die Dampfkapillare mit dem Effekt, dass der Schweißprozess und die Schmelzeströmung gestört wird und es daher zu Defekten wie Spritzer, Auswürfen oder Prozessporen kommt.

Mit der erfindungsgemäßen Anordnung sind typische Schweißfehler detektierbar, da sich bei diesen die Dampfkapillar-Geometrien jeweils signifikant ändern. Dies sind beispielsweise Auswürfe, bei denen große Schmelzbereiche im Prozess aus dem Schmelzband ausgeworfen werden. Diese können Löcher oder Fehlstellen in der Naht hinterlassen. Ferner sind auch Spritzer möglich, die sich aus der Dampfkapillare und insbesondere der Rückwand ablösen. Diese können das Bauteil oder die Umgebung kontaminieren bzw. zu einem Schmelzverlust in der Naht führen. Ferner können auch unzureichende Anbindungen zwischen Spalten festgestellt werden, wenn der Spalt zwischen den Blechen nicht richtig überbrückt werden kann und daher zu einer ungenügenden oder keiner Anbindung führt. Ferner können auch Nahtüberhöhungen oder Unterwölbung auf der Schweißnaht detektiert werden, die bei hohen Schweißgeschwindigkeiten auftreten können. Insbesondere hierbei kann es zu Fluktuationen in der Geometrie der Dampfkapillare und der Strömungsverhältnisse im Schmelzbandnachlauf kommen. Auch können Einschweißtiefenschwankungen detektiert werden, bei denen ein Rückgang oder eine Zunahme der Einschweißtiefe mit Schwankungen in der Geometrie der Dampfkapillare verbunden ist. Kommt es zu einem schweißnahen Aussetzer oder zu einem Prozessabbruch, führt ein solcher Fehler zu einer massiven Änderung der Geometrie der Dampfkapillare. Bei einer Änderung der Geometrie der Dampfkapillare ist dies insbesondere in den verschiedenen Polarisationsrichtungen besonders gut sichtbar und führt zu entsprechend unterschiedlichen Änderungen in der Intensität.

Weitere Vorteile ergeben sich aus den abhängigen Ansprüchen. So ist es vorteilhaft, genau zwei Signale unterschiedlicher Polarisationsrichtungen auszuwerten, da hierdurch einerseits eine zuverlässige Aussage möglich ist und andererseits der Rechenaufwand für die Auswertung begrenzt wird. Hierbei ist es insbesondere vorteilhaft, wenn die weiteren unterschiedlichen Polarisationsrichtungen orthogonal zueinander gewählt werden, um eine besonders zuverlässige Auswertung zu erhalten.

Weiterhin ist es vorteilhaft, Signale in einem Wellenlängenbereich zwischen 400 nm und 2000 nm auszuwerten. In diesem Wellenlängenbereich ergibt sich eine für die Schmelzprozesse besonders nachvollziehbare Einflussnahme auf den Schmelzprozess durch Störungen. Insbesondere ist für die Auswertung ein Wellenlängenbereich zwischen 400nm und 1100nm vorteilhaft, da in diesem Bereich empfindliche, schnelle und günstige Silizium-Dioden verwendet werden können.

Weiterhin ist es vorteilhaft, die Signale jeweils von einer Photodiode zu erfassen. Photodioden haben den Vorteil, dass sie einerseits kostengünstig sind, durch die Auswahl des Diodenmaterials leicht an einen zu beobachtenden Wellenlängenbereich angepasst werden können, dass sie schnell und sensitiv sind und dass sie ein integrales Signal aus der Laserwechselwirkungszone zuverlässig bereitstellen können.

Weiterhin ist es vorteilhaft, Signale für eine Auswertung ein- oder mehrfach miteinander rechnerisch zu kombinieren und diese Kombinationen bezüglich der Referenzinformationen auszuwerten. Hierdurch können Störungen und Messfehler gegebenenfalls herausgekürzt oder zumindest minimiert werden. Insbesondere können durch natürliche Streuung verursachte vermeintliche Fehler leichter ausgeschlossen werden.

Weiterhin ist es vorteilhaft, für den Laserstrahlschweißvorgang einen Bahnverlauf zunächst auf einem Target durchzuführen und aus den aufgenommenen Aufnahmen für den Fall, dass der Laserstrahlschweißvorgang ordnungsgemäß durchgeführt wurde, Referenzinformationen empirisch zu gewinnen und abzuspeichern, um die Überwachungseinrichtung mit diesen aufgenommenen Informationen zu kalibrieren. Hierbei wird vorteilhaft ausgenutzt, dass sich die aufgenommenen Signale abhängig von einer Bewegungsrichtung des Lasers über das Target unterscheiden und somit ein Bahnverlauf des Schweißvorgangs die zu erwartenden aufgenommenen Intensitäten beeinflusst. Die entsprechende, bewegungsabhängige Kalibrierung kann damit die Zuverlässigkeit einer Auswertung des Laserstrahlschweißvorgangs verbessern.

Weiterhin ist es vorteilhaft, dass bei einer ermittelten Störung des Laserstrahlschweißvorgangs in Abhängigkeit von der ermittelten Abweichung die Laserleistung für den Laserstrahlschweißvorgang direkt angepasst wird. Durch diese Anpassung ist es möglich, einen Umfang einer Störstelle zu begrenzen, so dass die Störstelle oder der Schweißfehler für den Schweißvorgang selbst unbeachtlich bleibt. So kann insbesondere die Laserleistung reduziert werden, wenn ein zu starker Auswurf von Material aus der Prozesszone erfolgt. Damit wird vermieden, dass Prozessänderungen erst dann durchgeführt werden, wenn es zu einer erheblichen Temperaturerhöhung im Schmelzbad gekommen ist oder Spritzer bereist wegfliegen. Mit dem vorliegenden Verfahren ist es allerdings möglich bereits erste Änderungen in der Kapillarform zu detektieren - also Änderungen im Prozess bevor ein Fehler wie z.B. ein Spritzer überhaupt entsteht oder der Prozess und die Energieeinkopplung gestört ist. Diese frühzeitigere Detektion von Anomalien eröffnet eine effiziente Möglichkeit zur Regelung des Prozesses, ohne dass sich Schweißfehler ereignen.

Weiterhin ist es vorteilhaft, die Referenzinformationen aus einem maschinell eingelernten neuronalen Netz bereitzustellen. Hiermit können Abweichungen der Intensitätskurven bei einem gut eingelernten neuronalen Netz sicher erkannt werden.

Entsprechende Vorteile ergeben sich für eine Überwachungseinrichtung zur Durchführung des erfindungsgemäßen Verfahrens.

In einer weiteren Ausführungsform ist es auch möglich, Kameras zur Helligkeitserfassung einzusetzen, die gegebenenfalls auch ergänzend auch dazu ausgelegt sind, eine Bildinformation aufzunehmen, zum Beispiel zur Dokumentation.

Weiterhin ist es vorteilhaft, einen zusätzlichen Laser in Ergänzung zu dem für den Laserstrahlschweißvorgang vorgesehenen Laser, vorzusehen, der als Messlaserstrahl dient, da mit diesem Laser ein Messlaserstrahl in einer anderen Wellenlänge als der Arbeitslaserstrahl bereitgestellt werden kann und somit ein besonders günstiger Wellenlängenbereich für die Überwachung durch die geeignete Wellenlängenwahl des Messlasers bereitgestellt wird und eine Beeinflussung durch den Bearbeitungslaser ausgeschlossen werden kann.

Hierbei ist vorteilhaft, wenn der zusätzliche Laser zirkular polarisiert ist und der zurückreflektierte Anteil des Lasers in mindestens zwei Polarisationsrichtungen ausgewertet wird. Zur Verbesserung der Auswertung können auch hier noch weitere Polarisationsrichtungen (Linearkombinationen dieser Polarisationsrichtungen) ausgewertet werden. Auch könnten alternativ zwei zusätzliche Laser mit unterschiedlichen Polarisationsrichtrungen und/oder Wellenlängen verwendet werden.

### Zeichnung

Ausführungsbeispiele der Erfindung sind in der Zeichnung dargestellt und in der nachfolgenden Beschreibung näher erläutert.

Es zeigen:
- Figur 1: eine erfindungsgemäße Überwachungseinrichtung mit einem Laser zur Durchführung des Laserstrahlschweißprogramms,
- Figur 2: ein beispielhafter, optischer Aufbau der Überwachungseinrichtung der Figur 1
- Figuren 3a und 3b: sowie die Figuren 4a und 4b zwei Beispiele für beispielhaft aufgenommene Referenzinformationen für zwei unterschiedliche Bahnverläufe des Lasers bei Laserschweißvorgängen,
- Figur 5: ein Beispiel für einen aufgenommenen Intensitätsverlauf eines Helligkeitsverlaufs für eine Polarisationsrichtung mit beispielhaften, dargestellten Störungen des Laserstrahlschweißvorgangs.

### Ausführungsformen der Erfindung

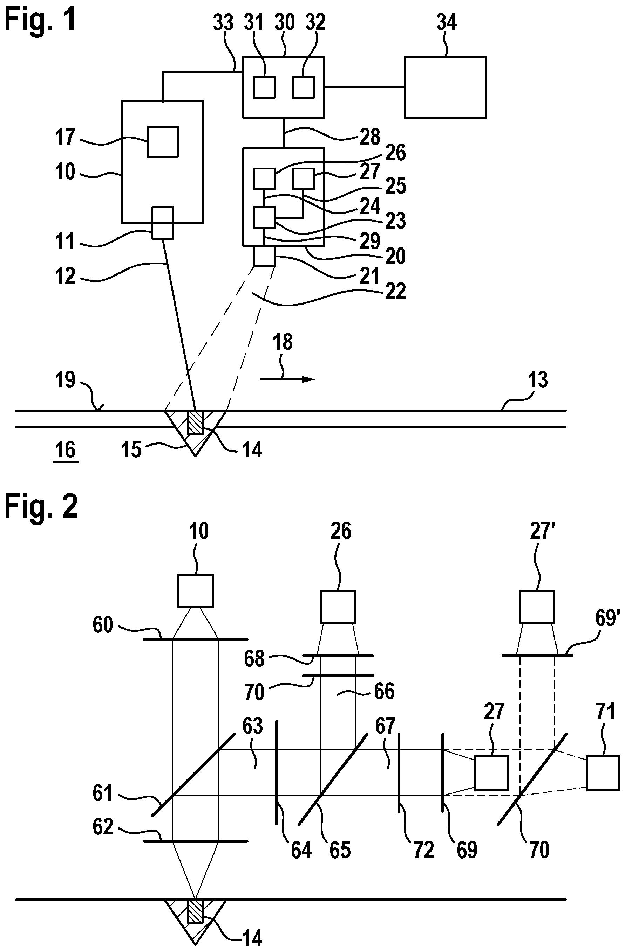

In der Figur 1 ist ein Laser 10 dargestellt, der eine Lasereinheit 11 aufweist, die Laserlicht 12 auf ein Material 13 abstrahlt. Das Laserlicht trifft im Bereich der sogenannten Dampfkapillare 14 auf das Material 13, wobei sich um die Dampfkapillare 14 eine Aufschmelzzone 15 mit größerer Schmelztemperatur ausbildet. Hierdurch kann das Material 13 mit einem darunterliegenden Material 16 an der Stelle der Dampfkapillare 14 verschweißt werden. Die Lasereinheit 11 wird durch eine Steuereinrichtung 17 derart gesteuert, dass sich der Laserstrahl 12 in Pfeilrichtung 18 über die Oberfläche des Materials 19 bewegt.

Ferner ist eine Überwachungseinrichtung 20 vorgesehen, deren Optik 21 auf die Oberfläche 19 des Materials 13 gerichtet ist, wobei ein Überwachungsbereich 22 so ausgerichtet ist, dass er den Aufschmelzbereich 15 und insbesondere einen Oberflächenbereich der Dampfkapillare 14 umfasst. In einer weiteren Ausführungsform kann der Überwachungsbereich 22 derart ausgerichtet sein, dass er ausschließlich auf eine Oberfläche der Dampfkapillare 14 gerichtet ist. Von der Optikeinheit 21 wird ein empfangener Lichtstrahl auf einen Strahlteiler 23 geführt, wobei der empfangene Strahl 29 in einer ersten Strahl 24 mit einer ersten Polarisationsrichtung und in einen zweiten Strahl 25 mit einer von der ersten Polarisationsrichtung verschiedenen zweiten Polarisationsrichtung aufgespalten wird. In einer Ausführungsform sind die beiden Polarisationsrichtungen um 90 Grad gedreht und damit orthogonal zueinander. In weiteren Ausführungsformen ist es auch möglich, noch weitere Aufteilungen der Polarisationsrichtungen, zum Beispiel 45 Grad und 90 Grad und 0 Grad zu wählen und damit mehr als zwei Strahlen mit einer jeweiligen Polarisationsrichtung zu erzeugen. Die Strahlen 24, 25 werden jeweils zu einer ersten Erfassungseinheit 26 bzw. zu einer zweiten Erfassungseinheit 27 geführt, die jeweils als Intensitätsmesseinrichtungen für eine Lichtintensität der Lichtstrahlen 24, 25 ausgebildet sind. Die gemessenen Intensitäten werden über eine Datenverbindung 28 an eine Auswerteinrichtung 30 weitergeleitet, bei der eine Recheneinheit 31 die empfangenen Daten mit in einem Speicher 32 abgelegten Referenzinformationen vergleicht.

Die Empfangseinheiten 26, 27 sind vorzugsweise als Photodioden oder Kameras ausgeführt. Photodioden sind hierbei günstiger und ermöglichen ebenfalls eine gute Bestimmung einer Helligkeit. Bei der Verwendung von Kameras kann auf einfacher Weise ein Intensitätswert für unterschiedliche, vorzugsweise disjunkte Bildbereiche bestimmt werden. Die Auswahl der Photodioden können insbesondere durch die Auswahl des Diodenmaterials an die jeweilige Wellenlänge je nach der im Prozess verwendeten Strahlung bzw. an eine Strahlung eines Messlasers angepasst werden. So können beispielsweise Silizium, Indium, Gallium, Arsenit (auch Schwefel) oder Germanium-Fotodioden verwendet werden.

Bei der Auswahl unterschiedlicher Bereiche kann auf die Dampfkapillare fokussiert werden. Je nach Prozess kann es aber auch vorteilhaft sein, zusätzlich Randbereiche der Dampfkapillare zu betrachten oder nur Ausschnitte einer Dampfkapillare.

Für die Auswahl der entsprechenden Referenzinformationen kann die Steuereinheit 17 des Lasers 10 eine Information über eine Intensität des Laserstrahls 12 und/oder eine Bewegungsrichtung 18 des Lasers über eine zweite Datenverbindung 33 an die Auswerteeinheit 30 übermitteln. Stellt die Recheneinheit 31 eine über ein vorgegebenes Maß hinausgehende Abweichung der von der Überwachungseinheit 20 empfangenen Intensitätswerte von den Referenzinformationen fest, so erfolgt in einer ersten Ausführungsform einer Ausgabe einer Warnung über eine Ausgabeeinheit 34. Somit kann eine fehlerhafte Laserschweißverbindung dokumentiert und der Fehler gegebenenfalls manuell behoben oder das entsprechende Bauteil als fehlerhaft ganz oder für eine manuelle Nachprüfung aussortiert werden. Hierbei kann der Schweißprozess entweder zunächst zu Ende geführt oder alternativ auch im Fehlerfall unmittelbar abgebrochen werden.

In einer weiteren Ausführungsform gibt die Auswerteeinheit 30 über die zweite Datenverbindung 33 eine entsprechende Information über eine Abweichung weiter, beispielsweise eine zu geringe Intensität aufgrund eines Verdampfens von schmelzendem Material aus der Dampfkapillare 14 aufgrund einer zu hohen Laserleistung. Die Information über eine zur hohe Laserleistung wird von der Steuereinheit 17 des Lasers 10 empfangen und führt dazu, dass die Steuereinheit die Laserleistung zum Beispiel um 10 % reduziert. Gegebenenfalls kann eine Wiederholung des Schweißvorgang an der zuvor abgetasteten Stelle im Nachgang automatisiert veranlasst werden.

In einer ersten Ausführungsform können die Werte für die unterschiedlichen Polarisationsrichtungen separat voneinander mit Referenzinformationen für die jeweiligen Polarisationsrichtungen verglichen werden. Eine Beurteilung einer fehlerhaften Laserschweißverbindung kann dabei in einer ersten Ausführungsform dann erfolgen, wenn einer der beiden Intensitätswerte über ein vorgegebenes Maß von einem erwartenden Referenzwert abweicht. In einer weiteren Ausführungsform ist es aber auch möglich, einen Fehler dann vorzusehen, wenn beide Werte von einem vorgegebenen Referenzwert abweichen.

In einer weiteren Ausführungsform kann auch berücksichtigt werden, dass die entsprechenden Intensitätswerte bei einem Laserschweißprogramm nicht konstant auftreten, sondern dass es auch bei einem ordnungsgemäß durchgeführten Schweißvorgang zu Streuungen kommt. Bei fest vorgegebenen Grenzwerten kann dies dazu führen, dass entweder kritische Ereignisse in der Streuung untergehen oder dass bei einer zu engen Einstellung Fehlalarme erzeugt werden. Zur Verbesserung ist daher im Speicher 32 vorzugsweise ein maschinell eingelerntes neuronales Netzwerk vorgesehen, bei dem nicht nur Absolutwerte als Referenzinformationen herangezogen werden, sondern die entsprechenden Muster der Intensitätsmessung mit vorgegebenen Mustern verglichen werden. Kommet es hierbei zu einer Abweichung von einem vorgegebenen Muster, so wird ein Fehler der Schweißvorgangs festgestellt.

Referenzinformationen können einerseits rechnerisch bestimmt werden, andererseits ist es vorteilhaft, die Referenzinformationen experimentell zu bestimmen, insbesondere bezüglich des jeweiligen zu schweißenden Materials.

In einer weiteren Ausführungsform können alternativ oder ergänzend die unterschiedlichen Intensitätswerte auch rechnerisch kombiniert ausgewertet werden. In einer Ausführungsform kann beispielsweise ein Quotient der beiden Intensitäten bestimmt und mit einem Referenzwert für den Quotienten verglichen werden. Hierbei ist es möglich, dass sich Störungen, gegebenenfalls herauskürzen und somit signifikante Abweichungen besser erkannt werden können. Auch andere mathematische Funktionen zur Fusion der Signale oder zur Normierung können herangezogen werden. Die entsprechende Funktion ist gegebenenfalls experimentell für das jeweilige Material und den Anwendungszweck des Laserschweißvorgangs zu bestimmen. So kann es beispielsweise vorteilhaft sein, eine Summe der Intensitäten heranzuziehen. Ferner kann auch beispielsweise die Intensität der ersten Polarisationsrichtung durch die Summe der Intensitäten beider Polarisationsrichtung als fusioniertes Signal bestimmt und weiterverwendet werden. In einer weiteren Ausführungsform ist es auch möglich, die Intensitätssignale durch die Laserleistung zu dividieren, um damit ein normiertes Signal zu erhalten. Eine Vermeidung von Fehlalarmen kann dabei dadurch erreicht werden, dass erst bei der Überschreitung von zwei oder ggf. auch mehr der auf diese Weise rechnerisch bestimmten Werten im Vergleich zu den jeweiligen Referenzwerten eine Abweichung festgestellt wird.

Die Referenzwerte werden dabei vorzugsweise derart bestimmt, dass verschiedene Laservorgänge durchgeführt werden, die als optimal oder akzeptabel eingestuft sind. Die bei diesen Laservorgängen gemessenen Intensitäten werden als Referenzinformationen für die Beurteilung weiterer Vorgänge herangezogen. Bei der Auswertung werden dann Abweichungen von den erwartenden Signalen bzw. Anomalien bestimmt. Derartige Intensitäts-Abweichungen deuten darauf hin, dass an der entsprechenden Stelle des Laserschweißprozesses die Dampfkapillare oder das Schmelzbad nicht der Referenz entsprochen haben. Somit können Schmelzbadauswürfe und andere Instabilitäten im Schweißprozess möglichst früh detektiert und gegebenenfalls rechtzeitig beseitigt werden, indem eine Steuerung des Lasers und insbesondere der Laserintensität entsprechend erfolgt. Ferner ist es auch möglich, das Strahlprofil des Lasers entsprechend anzupassen bzw. an einer Fokussierung auf den Schweißpunkt zu optimieren.

Bei Laserprozessen, bei denen geometrische Muster wie Kurven, Rechtecke oder andere Geometrien wie beispielsweise Wellenformen als Bahnkurve auf dem Material nachgefahren werden, ändert sich die Ausrichtung der Dampfkapillare und damit der entsprechende Anteil der in unterschiedlichen Richtungen polarisierten Lichts, das von der Dampfkapillare ausgeht, bedingt durch die Bahnbewegung des Laserstrahls über das Bauteil. Insofern sind die Intensitäten des Lichts für unterschiedliche Polarisationsrichtungen abhängig davon, in welcher Richtung der Laser über die Oberfläche des zu bearbeitenden Materials geführt wird. In einer ersten Ausführungsform kann für die Auswertung diese Abhängigkeit vernachlässigt werden. In einer Weiterbildung ist es allerdings auch möglich, diese Abhängigkeit zu berücksichtigen. Daher wird zur Verbesserung der Detektion von Fehlern für eine entsprechende durchzuführende Schweißgeometrie eine Kalibrierung durchgeführt. In einer ersten Ausführungsform wird dabei eine Abhängigkeit der unterschiedlichen polarisierten Lichtanteile von einem Bewegungsvektor ausgehend von einem Nullpunkt eines Koordinatensystems bestimmt. Für jeden Bewegungsvektor bzw. für eine ausgewählte Menge von Bewegungsvektoren können dabei die erwartenden Signale für die unterschiedlichen Polarisationsrichtungen bestimmt werden. In einer weiteren Ausführungsform werden von dem Laser bestimmte Muster auf dem Material gefahren und die Anteile der Intensitäten werden hierbei bestimmt.

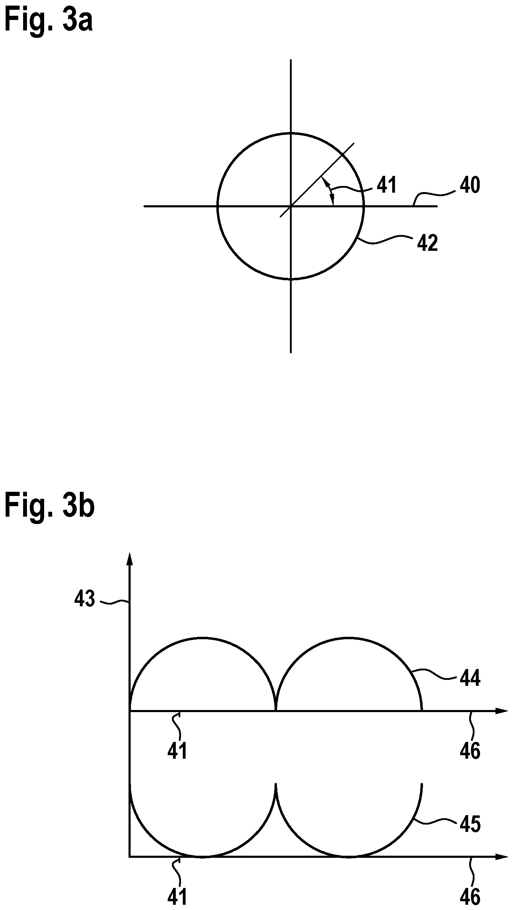

Ein Ausführungsbeispiel hierfür ist in der Figur 3A dargestellt. In Bezug auf ein virtuelles Koordinatensystem 40 wird von dem Laser in einem jeweiligen Winkel 41 eine Kreisbahn 42 über die Oberfläche gefahren. In der Figur 3b sind dabei auf einer y-Achse 43 die Intensitäten sowohl für eine erste Polarisationsrichtung 44 als auch die Intensitäten für eine zweite Polarisationsrichtung 45 über dem Winkel 41 des Lasers entlang der Kreisbahn 42 dargestellt, der auf einer x-Achse 46 aufgetragen ist.

Eine solche Bestimmung von Intensitäten, also quasi eine Kalibrierung, kann ergänzend oder alternativ für unterschiedliche Vorschubgeschwindigkeiten oder unterschiedliche die Laserleistungen durchgeführt werden. Das ist vorteilhaft, wenn die Bahngeometrien diesbezüglich mit örtlich unterschiedlichen Parametern bearbeitet werden.

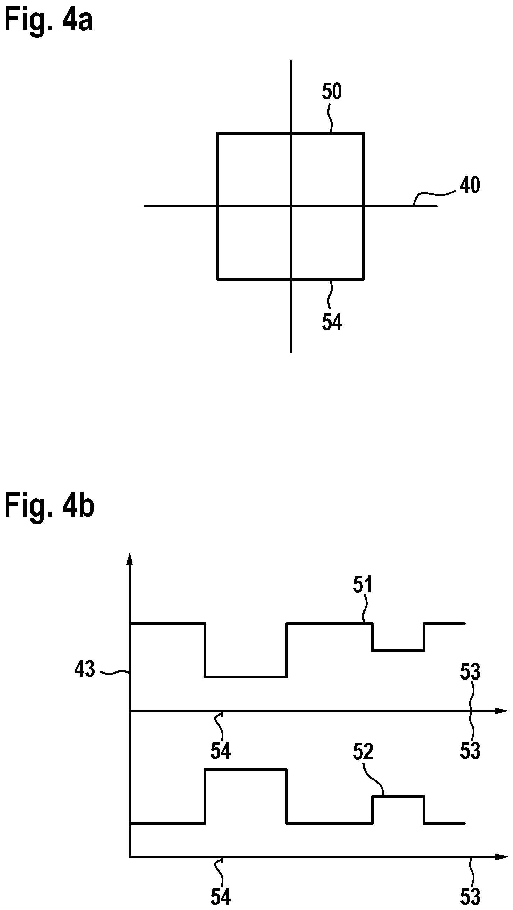

In der Figur 4A ist ein zweites Ausführungsbeispiel für eine rechteckige Kreisbahn 50 ebenfalls wieder über dem virtuellen Koordinatenkreuz 40 dargestellt, wobei der Laser ein Rechteckmuster auf der Oberfläche des Materials beschreibt. Auf der Y-Achse 43 ist eine erst Intensität 51 und eine zweite Intensität 52 gegenüber einer Position 53 auf der Rechteckbahn 50 dargestellt, die auf der X-Achse 56 dargestellt ist, wobei beispielsweise eine Position 54 herausgegriffen wurde.

In der Figur 2 ist der optische Strahlengang des Laserlichts und der Analyse im Detail dargestellt. Das Licht des Lasers 10 wird von einer Linse 60 parallelisiert, durchquert einen halbtransparenten Spiegel 61 und trifft auf einen Fokussierungslinse 62, die das Laserlicht auf die Dampfkapillare 14 fokussiert. Von der Dampfkapillare 14 ausgestrahltes Licht wiederum erreicht die Linse 62 und den transparenten Spiegel 61, der das entsprechende Licht nunmehr in einen Strahlengang 63 für die Auswertung umlenkt. Hierbei kann ein Filter 64 in den Strahlengang 63 eingebracht sein, um das Licht für die Auswertung auf einen gewünschten Wellenlängenbereich einzuschränken. Ferner kann das Filter auch eine Abschwächung beinhalten, die eine entsprechend zu hohe Intensität des empfangenen Lichtes verringert, um eine Schädigung der nachfolgenden Auswerteeinheiten zu vermeiden oder um den Sensor nicht zu übersteuern. Sodann trifft das Licht auf einen Strahlteiler 65, durch den ein Strahlengang 66 mit einer ersten Polarisationsrichtung und ein Strahlengang einer zweiten Polarisationsrichtung 67 erzeugt wird. Durch entsprechende Linsen 68, 69 wird das Licht dabei auf die erste Auswerteeinheit 26 und die zweite Auswerteeinheit 27 gebündelt.

Gegebenenfalls können weitere Filter 70, 72 in die Strahlengänge 66, 67 eingebracht werden. In einer alternativen Ausführungsform wird an der zunächst vorgesehenen Stelle die zweite Auswerteeinheit 27 weggelassen. Der Strahl 67 wird dann zunächst zu einem zweiten Spiegel 70 geführt, durch den das Licht die Sammellinse 69' und die zweite Auswerteeinheit 27' erreicht. Der zweite Spiegel 70 ist teiltransparent ausgeführt, wobei sich auf der dem Strahlteiler 65 abgewandten Seite einer Lasereinheit 71 befindet, die Laserlicht durch den teiltransparenten Spiegel 70 und den Strahlteiler 65 hindurch und über den ersten Spiegel 61 auf die Dampfkapillare 14 aussendet und als Messlaser dient. Vorzugsweise unterscheidet sich die Wellenlänge des Messlasers 71 von der Wellenlänge des Lasers 10, wobei die Empfangseinheiten 26, 27' darauf ausgelegt sind, in dem Wellenlängenbereich des Messlasers 71 eine Intensität zu messen. Hierdurch kann eine Messung unabhängig von der Wellenlänge des Lasers 10 oder von Umgebungslicht erfolgen, da bei der Messung der Intensität gezielt auf die Wellenlänge des Messlasers 71 abgestimmt wird.

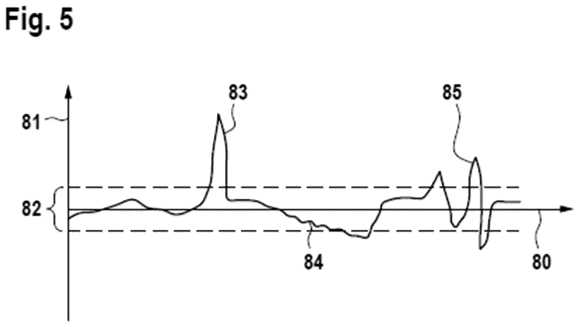

In der Figur 5 ist ein Beispiel für eine Intensitätsmessung für einen Quotienten der beiden Intensitätswerte für die unterschiedlichen Polarisationsrichtungen dargestellt. Über einem auf einer X-Achse 80 aufgetragenen Wegeverlauf einer Schweißnaht sind Intensitätswerte 81 auf einer y-Achse dargestellt. Die Intensitätswerte des Quotienten befinden sich im Regelfall innerhalb eines Bereiches 82, hierbei kann es zu kurzen Ausreißern 83, zu einem Wegdriften 84 oder zu starken Schwankungen 85 kommen. Das Wegdriften deutetet beispielsweise auf eine zu geringe Laserleistung hin, die starken Schwankungen auf einer zu hohe Laserleistung und die kurze Abweichung 83 auf einen Schweißfehler, der gegebenenfalls eine manuelle Nachkontrolle erfordert.

## Patentansprüche

1. Verfahren zur Überwachung eines Laserstrahlschweißvorgangs, wobei ein optisches Signal zumindest von einem Bereich der flüssigen Schmelze, insbesondere zumindest von einem Bereich der Dampfkapillare (14), aufgenommen und aus dem optischen Signal (29) Signale (24, 25) unterschiedlicher optischer Polarisationsrichtungen erzeugt werden, **dadurch gekennzeichnet, dass** die Helligkeit der optischen Signale (24, 25) unter Berücksichtigung von Referenzinformationen derart ausgewertet werden, dass bei einer vorgegebenen Abweichung von den Referenzinformationen eine Störung des Laserstrahlschweißvorgangs ermittelt wird.

2. Verfahren nach Anspruch 1, **dadurch gekennzeichnet, dass** genau zwei Signale unterschiedlicher Polarisationsrichtungen erzeugt werden.

3. Verfahren nach Anspruch 2, **dadurch gekennzeichnet, dass** die unterschiedlichen optischen Polarisationsrichtungen zueinander orthogonal gewählt werden.

4. Verfahren nach einem der vorhergehenden Ansprüche, **dadurch gekennzeichnet, dass** das beiden optischen Signale in einem infraroten Spektrum, insbesondere in einem Wellenlängenbereich zwischen 400nm und 2000nm, insbesondere 400nm-1 1 00nm erfasst werden.

5. Verfahren nach einem der vorhergehenden Ansprüche, **dadurch gekennzeichnet, dass** die Signale jeweils von einer Photodiode erfasst werden.

6. Verfahren nach einem der vorhergehenden Ansprüche, **dadurch gekennzeichnet, dass** die Signale für eine Auswertung ein- oder mehrfach rechnerisch miteinander kombiniert werden und die Kombinationen bezüglich der Referenzinformationen ausgewertet werden.

7. Verfahren nach einem der vorhergehenden Ansprüche, **dadurch gekennzeichnet, dass** der Laserstrahlschweißvorgang entsprechend einem vorgegebenen Bahnverlauf auf einem Bauteil (19) durchgeführt wird und dass die dem Bahnverlauf zugeordneten Referenzinformationen für die Auswertung herangezogen werden.

8. Verfahren nach einem der vorhergehenden Ansprüche, **dadurch gekennzeichnet, dass** bei einer ermittelten Störung des Laserstrahlschweißvorgangs in Abhängigkeit von der ermittelten Abweichung eine Anpassung der Laserleistung für den weiteren Laserstrahlschweißvorgang erfolgt.

9. Verfahren nach einem der vorhergehenden Ansprüche, **dadurch gekennzeichnet, dass** die Referenzinformationen von einem maschinell eingelernten neuronalen Netz bereitgestellt werden.

10. Überwachungseinrichtung für einen Laserstrahlschweißvorgang, insbesondere zur Durchführung des Verfahrens nach einem der vorherigen Ansprüche, **gekennzeichnet durch** eine optische Erfassungseinrichtung (20) zur Erfassung eines optischen Signals zumindest von einem Bereich der flüssigen Schmelze, insbesondere zumindest von einem Bereich der Dampfkapillare (14) eines Laserstrahlschweißvorgang, mit einer Stahlteilereinrichtung (23) zur Erzeugung aus von Signalen (24, 25) unterschiedlicher optischer Polarisationsrichtungen aus dem Signal, mit zwei Erfassungseinrichtungen (26, 27) zur Erfassung der beiden Signale und mit einer Auswerteeinrichtung (30) zur Auswertung der erfassten Signale unter Berücksichtigung von Referenzinformationen derart, dass bei einer vorgegebenen Abweichung von den Referenzinformationen eine Störung des Laserstrahlschweißvorgangs ermittelt wird.

11. Überwachungseinrichtung nach Anspruch 10, **dadurch gekennzeichnet, dass** die Erfassungseinrichtungen (26, 27) Kameras oder Photodioden umfassen.

12. Überwachungseinrichtung nach einem der Ansprüche 10-11, **gekennzeichnet durch** einen Laser (71), der zusätzlich zu dem Laser (10) für die Durchführung des Laserstrahlschweißvorgangs einen Messlaserstrahl zumindest auf den Bereich der flüssigen Schmelze, insbesondere zumindest auf den Bereich der Dampfkapillare (14) richtet.
